(19) Europäisches Patentamt
European Patent Office
Office européen des brevets

(11) **EP 3 358 791 A1**

(12) **EUROPEAN PATENT APPLICATION**

(43) Date of publication:
**08.08.2018 Bulletin 2018/32**

(51) Int Cl.:
*H04L 12/46* [(2006.01)]     *H04L 12/721* [(2013.01)]

(21) Application number: **17154316.8**

(22) Date of filing: **02.02.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **BUI, Dinh Thai
  91620 Nozay (FR)**
• **DOUVILLE, Richard
  91620 Nozay (FR)**

(74) Representative: **Sayettat, Julien Christian et al
Strato-IP
63, Boulevard de Ménilmontant
75011 Paris (FR)**

(54) **METHOD FOR TRANSMITTING MESSAGES FROM AN EMITTING CONNECTED OBJECT TO AT LEAST ONE RECEIVING CONNECTED OBJECT THROUGH AT LEAST ONE NETWORK ELEMENT**

(57)     Method for transmitting messages (M) between emitting and receiving connected objects (3) through a network element (2), comprising two ports ($P_k$) connected respectively to an object (3), said method configuring the network element (2) by: transmitting from a controlling device (4) to the network element (2) data-plane tagging information specifying at least one set of objects (3) allowed to communicate through said element (2); associating a port ($P_k$) with data-plane tags ($DPT(P_k)$) respectively identifying a set including objects (3) accessible through it in function of the data-plane tagging information; said method further forwarding a message (M) through the network element (2) by: associating the message (M) with one data-plane tag ($DPT(M)$) created according to a data plane rule and to information about the emitting object (3) provided within it; determining a port ($P_k$) through which the receiving object (3) is accessible; comparing tags ($DPT(M)$), ($DPT(P_k)$); forwarding the message (M) out of the port ($P_k$) or discarding the message (M) according to said comparison.

Fig. 3

**Description**

The present invention relates a method for transmitting messages from an emitting connected object to at least one receiving connected object through at least one network element, as well as a computer program comprising means for performing this method, a network element comprising means for implementing this method, and a controlling device for configuring this network element.

The drastic increase in the number of connected yet poorly secured objects which can communicate potentially private/sensitive information over the network is putting the current networking approach in question. In particular in settings like home where end-users do little to no network management, plugging in a new connected object virtually means the latter will be able to communicate with any other connected object on the same Local Area Network (LAN) - and to the outside world through the Internet gateway - without the user even knowing it. Thus, there is a strong need to isolate traffics between sets of connected objects with each set being a group of connected objects and related applications allowed to share information. A given connected object and its related applications can eventually be part of multiple of those sets of connected objects and related applications.

Various techniques have been proposed for isolating traffic between connected objects connected to a network. The majority of these techniques consists in encapsulating the original packet with an encapsulating header which allows for segregating traffics accordingly to their originating end-point and their destination end-point(s). For example, VLAN allows specifying Virtual Local Area Networks. Accordingly, connected objects physically connected (wired or wireless) to each other through one or more switches can communicate with each other within a Local Area Network (LAN) only if they belong to the same VLAN. In particular, a layer-2-broadcast message from a connected object is broadcasted only to connected objects belonging to the same the VLAN.

However, VLAN and other traffic isolation techniques, such as GRE (Generic Routing Encapsulation), VXLAN (Virtual extensible Local Area Network) and MPLS (Multi Protocol Label Switching) label, involve several issues.

Indeed, very simple objects, for example considered for "Internet of Things" applications, do not support VLAN tagging (or any of the other aforementioned isolation techniques). A typical simple object has only one WiFi LAN connection (i.e. one network connection).

Moreover, when a connected object belonging to a plurality of VLANs sends a multicast/broadcast packet, it has to duplicate this packet and send it out over multiple VLANs. This supposes that the application running on the connected object is aware of VLANs and capable of multicasting/broadcasting on multiple VLANs simultaneously. This is not the case of the majority of devices and related applications, even powerful ones such as a PC (Personal Computer) or a smart phone. Moreover, at the reception side, a connected object which has several VLANs in common with the emitting connected object receives the same multicast/broadcast information more than once. Apart from a waste of bandwidth, the application on the receiving connected object should be able to compare information received on the VLANs in order to discard redundant information. Without doing such discard, the application/protocol state machine could be corrupted by such information duplication, as it is, in general, not designed to work to receive the same information on different network interfaces.

It is thus an object of embodiments of the present invention to propose a method, a controlling device for configuring a network element, as well as a network element implementing some extra capabilities, such as some dedicated metadata, which do not show the inherent shortcomings of the prior art.

According to a first aspect, embodiments relate to a method for transmitting messages from an emitting connected object to at least one receiving connected object through at least one network element, said network element comprising at least two ports connected respectively to said emitting connected object and to said receiving connected object, either directly or through one or more other network elements, said method providing for configuring the network element according to a procedure which provides for:

- transmitting from a controlling device to the network element data-plane tagging information specifying at least one set of connected objects allowed to communicate with each other through said network element;
- for at least one port, associating said port with one or more data-plane tags respectively identifying a set of connected objects including one or more connected objects accessible through said port, in function of the data-plane tagging information;

said method further providing, upon the reception by said network element of a message from the emitting connected object to be transmitted to at least one receiving connected object, for executing a procedure for forwarding said message to said receiving connected object, said forwarding procedure providing the following steps:

- associating said message with one data-plane tag which is created according to a data plane rule generated by the controlling device and to at least one information about said emitting connected object provided within said message;
- determining at least one port of the network element through which said receiving connected object is accessible;

- at each determined port, comparing the data-plane tag associated with the message with the at least one data-plane tag associated with the determined port;
- forwarding the message out of the determined port or discarding the message according to the result of said comparison.

According to a second aspect, embodiments relate to a computer program comprising instructions for performing such a method when said instructions are executed by a computer.

According to a third aspect, embodiments relate to a controlling device for configuring a network element intended to transmit messages from an emitting connected object to at least one receiving connected object, said network element comprising at least two ports connected respectively to said emitting connected object and to said receiving connected object, either directly or through one or more other network elements, said controlling device comprising means for:

- transmitting to the network element data-plane tagging information specifying at least one set of connected objects allowed to communicate with each other through said network element, so as to allow the association of at least one port with one or more data-plane tags respectively identifying a set of connected objects including one or more connected objects accessible through said port, in function of the data-plane tagging information;
- generating, upon reception by the network element of a message from the emitting connected object to be transmitted to at least one receiving connected object, a data plane rule for allowing the network element to:

  ◦ create a data-plane tag according to said data plane rule and to at least one information about said emitting connected object that is provided within said message, and then to associate said data-plane tag with said message;
  ◦ determine at least one port of the network element through which said receiving connected object is accessible;
  ◦ at each determined port, compare the data-plane tag associated with the message with the at least one data-plane tag associated with the determined port;
  ◦ forward the unicast message out of the determined port or discard the message according to the result of said comparison.

According to a fourth aspect, embodiments relate to a network element for transmitting messages from an emitting connected object to at least one receiving connected object through at least one network element, said network element comprising at least two ports connected respectively to said emitting connected object and to said receiving connected object, either directly or through one or more other network elements, said network element comprising means for executing a configuration procedure, said means comprising means for:

- receiving from a controlling device data-plane tagging information specifying at least one set of connected objects allowed to communicate with each other through said network element;
- for at least one port, associating said port with one or more data-plane tags respectively identifying a set of connected objects including one or more connected objects accessible through said port, in function of the data-plane tagging information;

said network element further comprising means for executing, upon the reception by said network element of a message from the emitting connected object to be transmitted to at least one receiving connected object, a procedure for forwarding said message to said receiving connected object, said means comprising means for:

- associating said message with one data-plane tag which is created according to a data plane rule generated by the controlling device and to at least one information about said emitting connected object provided within said message;
- determining at least one port of the network element through which said receiving connected object is accessible;
- at each determined port, comparing the data-plane tag associated with the message with the at least one data-plane tag associated with the determined port;
- forwarding the message out of the determined port or discarding the message according to the result of said comparison.

In some embodiments, the network elements are located at a plurality of sites interconnected by remote links forming a fully meshed topology, the method comprising: determining a logical topology wherein a packet entering the network element by one remote link cannot be forwarded to another remote link.

In some embodiments, at least some of the network elements are connected by local links, the method comprising: determining a loop free topology of local links.

Configuring said network element may comprise sending forwarding and/or filtering rules by using the Open Flow protocol.

The above and other objects and features of the invention will become more apparent and the invention itself will be best understood by referring to the following description of embodiments taken in conjunction with the accompanying drawings wherein:

- Figure 1 is a block diagram of a network wherein a traffic isolation technique is used;
- Figure 2 is a flowchart of steps of a method for configuring at least one network element in the network of Figure 1;
- Figures 3 and 4 illustrate results of the method of Figure 2 applied to the network of Figure 1, according to two embodiments;
- Figure 5 is a structural view of a controlling device of the network of Figure 1;
- Figure 6 is a flowchart of the data-plane port tag association step of the configuration procedure of a method according to the invention; and
- Figures 7 and 8 are examples of data-plane tags associated to a message to be transmitted from an emitting connected object to a receiving connected object according to respectively a variant of the invention.

In relation with these figures, we describe below a method for transmitting messages from an emitting connected object to at least one receiving connected object through at least one network element, as well as a computer program comprising means for performing this method, a network element comprising means for implementing this method, and a controlling device for configuring this network element.

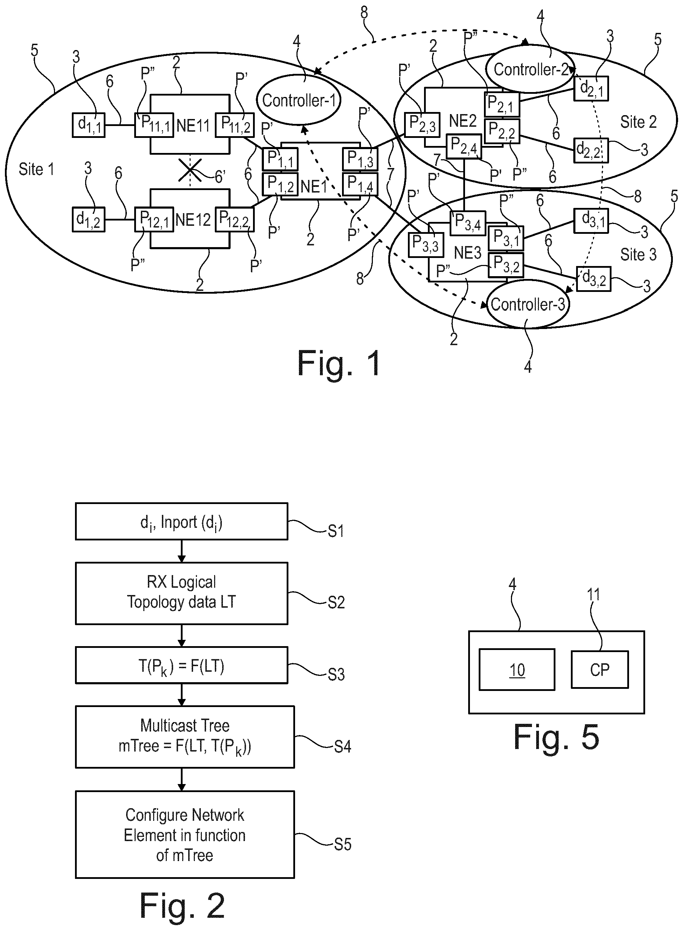

**Figure 1** is a block diagram of a network 1 comprising a plurality of network elements 2, a plurality of connected objects 3 and a plurality of controlling devices 4 arranged at one or more sites 5.

A network element 2 is a packet forwarding device responsible for receiving packets and forwarding the received packets according to forwarding rules, based in particular on a source address and a destination address included in each packet but also on other packet header fields and potentially on the analyze of the payload content. For example, a network element 2 is a switch and the forwarding rules may be configured by using the Open Flow protocol. A network element 2 comprises several network interfaces. Eventually, we could divide each of those network interfaces further into several logical network interfaces - e.g. in the case when a physical device is declined in several logical devices with each of the logical devices connected to a logical network interface. For simplicity, each of the aforementioned network interfaces (logical or not) will be called as a port P. There is a distinction between two types of ports P: those which are directly (physically or logically) connected to a connected object 3, hereafter called IoT-ports P'', and those which are not directly connected to a connected object 3, hereafter called Non-IoT-ports P'. Among the latter, there is also a distinction between local ports and remote ports. Local ports connect the network element 2 to another local network element 2 within the same site 5, directly or indirectly via unmanaged network element (an unmanaged network is a network element which cannot be configured accordingly to the method described in this document), while remote ports connect the network element 2 to another remote network element 2 in a remote site 5. In the example of Figure 1, the networks elements 2 are denoted NE1, NE11, NE12, NE2 and NE3, and the ports are denoted P1.1, P1.2, P1.3, P1.4, P11.1, P11.2, P12.1, P12.2, P2.1, P2.2, P2.3, P2.4, P3.1, P3.2, P3.3 and P3.4.

In particular, for allowing a network element 2 to transmit messages from an emitting connected object to at least one receiving connected object, at least two ports $P_k$ of said network element are necessarily connected respectively to said emitting connected object and to said receiving connected object, either directly (through an IoT-port P'') or through one or more other network elements 2 (through a non-IoT-port P').

The terms "connected object" designate, in this document, either a physical device or a logical device (a subset - e.g. a particular application - of the associated physical connected device) depending on the context (e.g. connected to a physical or a logical network interface). A connected object 3 may be one logical declination of any type of devices bound with one or several (may be all) communicating applications running on it, capable of sending and/or receiving messages (for example packets or frames) on the network 1. This includes for example user terminals such as PC (Personal Computers), Smartphones, multimedia devices, storing devices, "Internet of Things" devices, DHCP (Dynamic Host Configuration Protocol) server application running on a device, or a SMTP (Simple Mail Transfer Protocol) server application running on the same device. In the example of Figure 1, the connected objects 3 are denoted $d_{1.1}$, $d_{1.2}$, $d_{2.1}$, $d_{2.2}$, $d_{3.1}$ and $d_{3.2}$. Eventually, $d_{2.1}$ and $d_{2.2}$ could be the same physical device sharing a common network interface but each of them considered (by the controlling device 4) as two different entities emitting different types of traffic according to the related applications that have to be handled and forwarded differently.

A controlling device 4 is responsible for configuring one or more network elements 2. In this example, a controlling device 4 is associated with each site 5 and is responsible for configuring the network elements 2 of the associated site 5. Controlling devices 4 may exchange information between them. Eventually a given controlling device 4 can have access to all the control information across the network 1 - there could be considered here as a "centralized" control architecture. Thus, in some embodiments, a single controlling device 4 may be responsible for configuring network elements 2 of various sites 5. In the example of Figure 1, the controlling devices 4 are denoted Controller-1, Controller-2 and Controller-3, respectively.

Within a site 5, connected objects 3 and network elements 2 are connected with each other by local links 6. A local link may include for example a wireless and/or a wired connection, eventually with intermediate unmanaged network elements. The controlling device 4 configures the network elements 2 such that the local links 6 form a loop free topology, for example by using the spanning tree algorithm. This is illustrated on figure 1 by the deactivated local link 6' connecting two network interfaces (not shown) of network elements NE11 and NE12. Such network interfaces are not used in the network 1 and are not ports within the meaning of this description.

Between sites 5, network elements 2 are interconnected by remote links 7 forming a fully mesh topology. The remote links 7 may be realized by tunneling technique, such as GRE (Generic Routing Encapsulation), VXLAN (Virtual extensible Local Area Network), or VLL (Virtual Leased Line), over an IP (Internet Protocol) wide area network, for example. In some embodiments, there is only one site 5 and no remote links 7. Among sites 5, controlling devices 4 determine also a loop-free logical topology, for example by applying a split-horizon technique.

The controlling devices 4 from each site 5 discuss with its peers via a semaphore network 8 (see dashed arrows in Figure 1). The latter could be either implemented as in-band (i.e. taking the same path as data traffics) or as out-of-band (i.e. a dedicated infrastructure). In any case, the controlling device 4 of each site can have access to information from remote sites via the semaphore network 8. Accordingly, the described architecture could be seen as a "centralized" architecture at the control level (i.e. information from remote sites could be "centralized" by a local controlling device 4).

The network 1 uses a traffic isolation technique wherein sets of connected objects 3 allowed to communicate with each other are specified. A set of connected objects 3 allowed to communicate with each other is called herein a SD-LAN, for Software-Defined Local Area Network. Note that "Local" here does not mean within a single site 5, but rather that packets are forwarded in this example based on Layer 2 information without the need of Layer 3 routing.

A SD-LAN may be defined by a semi-automatic process, based on service requests from users through a simple user interface. For example, a user of a Smartphone may request a video playing service, and this will result in the creation of a SD-LAN including the Smartphone, a video server and a TV. For another example, a user would like to restraint DHCP request messages issue from all client devices to only DHCP servers. In this last example the broadcast messages issue from a DHCP client (alternatively a server) are only forwarded to DHCP servers (alternatively the concerned client). This could be done using UDP (User Datagram Protocol) ports 67 and 68 to distinguish DHCP broadcast traffic from other broadcast traffic of other applications.

The method provides for configuring the network elements 2 in function of the specified SD-LANs, according to the configuration procedure described herein below.

For configuring a given network element 2, the configuration procedure first provides for transmitting, from a controlling device 4 associated with said network element to said network element, data-plane tagging information specifying at least one set of connected objects 3 allowed to communicate with each other through said network element.

In particular, the data-plane tagging information may be generated by the controlling device 4 from control tagging information which are stored by said controlling device.

Figure 2 is a flowchart of steps executed by a controlling device 4 during a procedure which allows for configuring one or more network element 2. The following notations are used in the description:

- $d_i$: connected object i (a connected object 3);
- $S_k$ : SD-LAN k, a set of connected objects i allowed to communicate with each other;
- $d_i \in \{S_k, S_l, S_m\}$: connected object i is pertaining to SD-LANs k, l and m;
- $NE_n$: Network element n (a network element 2);
- $V(di) = U(S_k)$: union of all SD-LANs that the connected object i pertains to;
- $P(d_i)$: Network element port which is connected directly to the connected object $d_i$ - This is an IoT-port;
- $P_k \in NE_n$: port $P_k$ is a port of $NE_n$;
- $T(P_k)$: the set of tags (i.e. SD-LANs IDs) associated to a port (both IoT and non-IoT port);
- $T(V(d_i))$: the set of SD-LANs IDs (or tags) associated to connected object i. For example, if $d_i \in S_k, S_l, S_m$, then $T(V(d_i)) = \{k, l, m\}$.

For generating control tagging information, the controlling device 4 associated with one network element 2 may identify the connected objects 3 connected to the network element 2 and the associated Inports P (Step S1). For example, as the connected objects 3 send messages in the network 1, a given controlling device 4 learns/discovers the existence of a new connected object i thanks to these messages containing identification information ($id_i$) allowing to identify this new connected object i entering the associated network element 2. In particular, the method can provide, upon reception by a port Pk of the network element 2 of a first message from a new connected object i, that said network element further sends a request to the controlling device 4 for such an identification.

The controlling device 4 registers then connected object i as a known connected object and memorizes the port P (which is a non-IoT-port P' or an IoT-port P") where this identification information has entered the network element 2, i.e. the port P, P', P" which have received the first message from the new connected object i. Within each network element 2, this latter port is called the Inport($d_i$). It is noted that there is one unique Inport($d_i$) per network element 2 associated to a given connected object i, otherwise there is a potential loop.

Different means can be used to identify connected objects 3. For example some connected objects 3 may be identified only according to their MAC (Media Access Control) addresses and others may be identified when emitting IP (Internet Protocol) packet on TCP (Transmission Control Protocol) port 8095 (that may be used to identify a specific application). Thus in this document, the reader can replace identification information by any identification filter to apply on received messages in order to identify uniquely different connected objects 3 relatively to other connected objects 3 even if the distinction between connected objects 3 may be realized through filtering hierarchy definition.

Also, the controlling device 4 may obtain logical topology information specifying at least one SD-LAN in the network 1. For example, the logical topology information LT include a list of SD-LANs $S_k$, $S_l$, $S_m$ and, for each SD-LAN, the list of $d_i$ belonging to the SD-LAN. This is equivalent to the logical topology information LT including, for each $d_i$, the list of SD-LAN to which it belongs. The logical topology information LT allows for determining $T(V(d_i))$.

Then, the controlling device 4 may tag the ports P, P', P" of the associated network elements 2, in function of the logical topology information LT (Step S3). More specifically, for a port $P_k$, the controlling device 4 may associate control-plane tags $T(P_k)$ specifying the SD-LANs accessible through the port $P_k$, these control-plane tags $T(Pk)$ further being used as control tagging information for generating data-plane tagging information, as it will be described further below.

In one embodiment, the controlling device 4 tags only the IoT-ports P". In another embodiment, the controlling device 4 tags the IoT-ports P" and the Non-IoT-ports P'. In both cases, this can be done in function of the logical topology information LT by tagging the Inport($d_i$) of connected object $d_i$: $T(P_k) \supset T(V(d_i))$, where $V(d_i)$ is specified by the logical topology information LT.

Moreover, for a Non-IoT port P', the network element 2 may flood the packet to other ports to allow other network elements 2 to learn about the connected object i and tag the corresponding Inport($d_i$). This can be done for example as described hereafter in pseudo-code:

```
Initial state: all non-IoT ports are pass-through, IoT-ports are assumed to be
tagged -filtering at the IoT-ports- otherwise, non-tagged IoT-ports are blocking
at the outgoing direction.
```

For each incoming message entering network element 2 on port $P_k$ execute the following pseudo-code:

identify $d_i$ from the message and obtain the latest $T(V(d_i))$ /* by eventually communicating with another controlling device 4*/

if (( $d_i \notin$ known connected objects || $T(V(d_i))$ changed since last consultation) && $P_k$ is a non-IoT port) then {

Inport($d_i$) = $P_k$; /* Memorize Inport($d_i$), $d_i$ is now a known connected objects*/

$T(P_k) = T(V(d_i)) \cup T(P_k)$; /* add Tags for filtering outgoing traffics at Inport($d_i$) */

if($P_k$ is a local port) then flood the packet to all ports except $P_k$; /* $P_k$ is a local port, apply learning process */

else flood the packet to all local ports; /* $P_k$ is a remote port, apply split horizon procedure */

}

Note that this action of tagging is only performed at the control level for the control-only usage. It is different from the VLAN tagging where the action of tagging is performed at the data level (i.e. at the traffic frame level). Tagging non-IoT-ports P' is well-adapted to flat networks while it might rather be complex to tag non-IoT-port P' in hierarchical networks with a high number of hierarchical levels and highly dynamic appearance/disappearance of connected objects 3 (i.e. connected objects 3 entering and exiting the network 1 at high rate, a significant number of non-IoT-port tags may need to be refreshed). These two approaches (tagging or not tagging non-IoT-ports) lead to two different algorithms - see below.

For allowing transmission of broadcast/multicast messages through the network element, the controlling device 4 may determine, for each identified connected object 3, $d_i$, a multicast tree mTree from the associated Inport($d_i$) to one or more other ports $P_k$ of the network element 2, in function of the logical topology data LT and the control-plan tags $T(P_k)$ determined at step S3 (Step S4). Depending on whether only IoT-ports or both IoT-ports and Non-IoT-ports have been tagged at step S3, one of the following algorithm described in pseudo-code may be applied for each network element 2.

In the embodiment wherein all network element ports (i.e. both IoT-ports and non-IoT-ports) are tagged:

```
mTree = Ø;

for (each of all di є known connected objects) {

  get associated Inport(di);

  get T(V(di));  /* Get the set of SD-LANs IDs, or tags, associated to connected
device i */

  for (each of all Pk є network element 2 && Pk ≠ Inport(di)) {

    if(Inport(di) is remote port) {  /* if Inport is a remote port, then apply split
horizon procedure */

      if((T(Pk) ∩ T(V(di)) ≠ Ø) && Pk not remote port) then add Pk to mTree;

    } else {    /*  Inport is a local port, then no special procedure applied */

      if(T(Pk) ∩ T(V(di)) ≠ Ø) then add Pk to mTree;

    } /*end if */

  } /* end for */

} /* end for */
```

In the embodiment wherein only IoT-ports are tagged:

```
mTree = Ø;
for (each of all dᵢ ∈ known connected objects) {
    get the associated Inport(dᵢ);
    get T(V(dᵢ));  /* Get the set of SD-LAN IDs, or tags, associated to connected
object dᵢ */
    for (each of all Pₖ ∈ network element 2 && Pₖ ≠Inport(dᵢ)) {
        if(Inport(di) is remote port) {   /* if Inport is a remote port, then apply split
horizon procedure */
            if(((Pₖ is non-IoT) || (T(Pₖ) ∩ T(V(dᵢ)) ≠ Ø)) && Pₖ not remote port) then add
Pₖ to mTree;
        } else {  /*  Inport is a local port, then no special procedure applied */
            if((Pₖ is non-IoT) || (T(Pₖ) ∩ T(V(dᵢ)) ≠ Ø)) then add Pₖ to mTree;
        } /*end if */
    } /* end for */
} /* end for */
```

This description shows that although steps S1 to S4 are shown as successive steps on Figure 2, they may be executed in parallel in some embodiments.

Finally, the controlling device 4 may configure the network elements 2 for forwarding SD-LANs multicast and/or broadcast messages received from a connected object $d_i$ according to the determined multicast tree mTree (Step S5). In one embodiment, the controlling device 4 sends multicast/broadcast forwarding rules and/or filtering rules to the network element 2, for example by using the Open Flow protocol. In some embodiment, the controlling device 4 outputs configuration data to a human operator, which may then use the configuration data to manually configure the network elements 2. Note that some of SD-LANs multicast and/or broadcast may be specific. For example a SD-LAN can stipulate that its broadcast concerned only TCP port 8095.

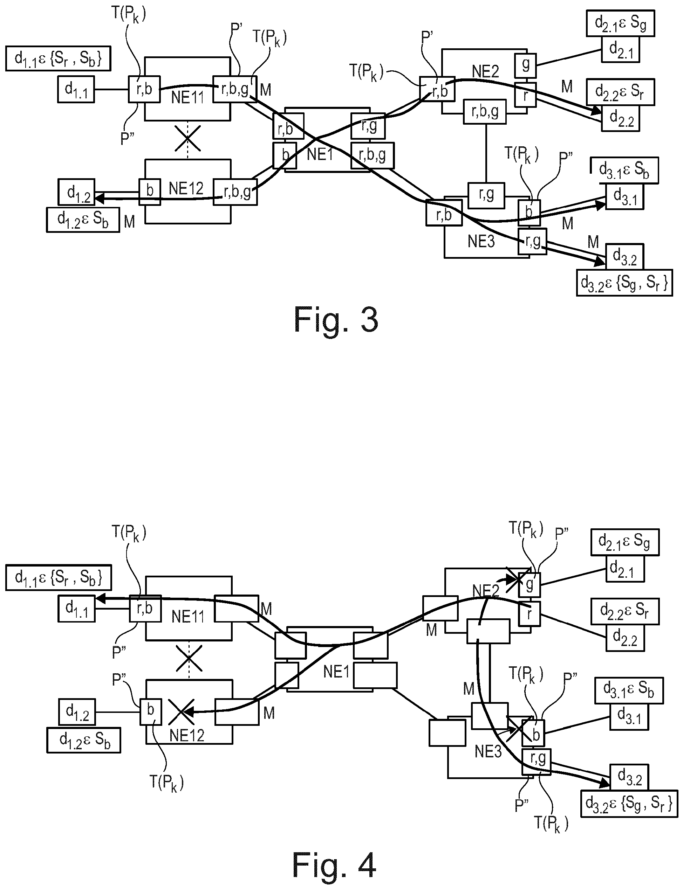

**Figure 3** shows the results of the method of Figure 2 applied to the network 1. In this example, three SD-LANs have been specified and the controlling devices 4 tags both IoT-ports and Non-IoT-ports. The specified SD-LANs are $S_r$, comprising $d_{1.1}$, $d_{2.2}$ and $d_{3.2}$, Sg, comprising $d_{2.1}$ and $d_{3.2}$, and $S_b$, comprising $d_{1.1}$, $d_{1.2}$ and $d_{3.1}$.

The controlling devices 4 have tagged the ports under their respective responsibility. More specifically, Controller-1 tags all ports of NE1, NE11 and NE12, Controller-2 all ports of NE2 and Controller-3 all ports of NE3. For each IoT-port, the controlling device 4 tags them with the SD-LAN IDs the associated connected object pertains to. For instance, Controller-1 tags the IoT-port, P11.1, with two tags, r and b, as the associated connected object, d1.1, pertains to two SD-LANs $S_r$ and $S_b$. For each non-IoT port, the controlling device 4 tags it with IDs of all SD-LANs (local and remote) reachable when a packet exits the network element 2 by this port. For instance, Controller-1 tags the non-IoT port, P11.2, with all the SD-LAN IDs, meaning r, b and g, as one can reach all 3 SD-LANs when exiting the NE11 by this port. On the same link and in the opposite data traffic direction, Controller-1 tags the non-IoT port, P1.1, with only two tags, r, b, as one can only reach connected objects pertaining to these two SD-LANs (i.e. only connected objects d11.1 in the present network 1), $S_r$ and $S_b$, when exiting the NE1 via this port. It is noted that Controller-2 only tags port P2.3 with only two tags, meaning r and b, as Sg should not be reachable via this port as per the "split horizon" procedure applied at the NE1 level by Controller-1 (i.e. traffic received at a remote port cannot be forwarded to another remote port).

From the aforementioned tags, each controlling device 4 can build up a multicast/broadcast tree depending on the originating connected object following the procedure described with reference to Figure 2. Figure 3 illustrates the end-to-end multicast tree from connected object $d_{1.1}$. This multicast tree is the concatenation of multicast trees mTree produced for each network element 2 for the same multicast traffic.

**Figure 4** shows the results of the method of Figure 2 applied to the network 1. In this example, three SD-LANs have been specified and the controlling devices 4 tag only IoT-ports. The specified SD-LANs are the same as in Figure 3, namely $S_r$, comprising $d_{1.1}$, $d_{2.2}$ and $d_{3.2}$, Sg, comprising $d_{2.1}$ and $d_{3.2}$, and $S_b$, comprising $d_{1.1}$, $d_{1.2}$ and $d_{3.1}$.

Figure 4 shows the multicast tree originating from connected object d2.2, which is the concatenation of the multicast trees mTree determined for each network element 2.

As non-IoT ports are not tagged, filtering is only performed at the IoT-ports. In the case of multicast traffic originating from connected object $d_{2.2}$, it is multicast amongst other to also NE12 before being filtered at P12.1. If the first algorithm had been applied, the multicast traffics would not have even entered NE12. Thus, the second algorithm generates more multicast traffics than the first algorithm. This is a tradeoff which aims at fewer network states. Alternatively, the second algorithm could be optimized: the Controller-1 can observe that mTree=Ø at NE12 for the observed multicast traffic. It can backoff one step and prune the NE1-> NE12 branch of mTree at NE1. This improved algorithm can result in the same amount of traffics as the first algorithm with the cost of more CPU (Central Processing Unit) power consumption compared to the second algorithm without optimization.

In particular cases, especially the transmission of unicast messages M from an emitting connecting object 3 to one receiving connecting object 3, it is desirable that said emitting connecting object emits one message M and that said receiving connecting object receives only one message M, even if both of said emitting and receiving connecting objects have several SD-LANs in common. Thus, connecting objects 3 can work as if they were in a traditional LAN network, but with a better control of their traffics.

For allowing the transmission of messages M, which can be broadcast/multicast messages or unicast messages, through a network element 2, the configuration procedure provides, as mentioned hereinabove, to use control tagging information stored by a controlling device associated 4 with said network element 2, especially based on control-plane tags $T(P_k)$ associated with ports $P_k$ of said network element, for generating data-plane tagging information to be transmitted to said network element.

The configuration procedure can notably provide that the controlling device 4 generates such data-plane tagging information by translating such control tagging information in a format readable by said network element.

Then, the configuration procedure provides, for at least one port $P_k$ of the network element 2, for associating said port with one or more data-plane tags $DPT(P_k)$ respectively identifying a set of connected objects including one or more connected objects 3 accessible through said port, in function of the data-plane tagging information.

The method can provide for transmitting data-plane tagging information upon reception by a port $P_k$ of the network element 2 of a first message from a new connected object 3, said network element further sending, through dedicated means, a request to the controlling device 4 for obtaining said data-plane tagging information, and then associating the receiving port $P_k$ with a data-plane tag $DPT(P_k)$ according to said data-plane tagging information.

In particular, the sending of this request can be performed during the identification step S1, the generation and transmission of data-plane tagging information being performed in parallel to the control-plane tag association step S3.

To do so, the controlling device 4 comprises means that are arranged for generating and transmitting to the network element 2 such data-plane tagging information, and more particularly means that are arranged for translating such control tagging information in a format readable by said network element.

Moreover, the network element 2 comprises means for receiving such data-plane tagging information, as well as means for associating the one or more data-plane tags $DPT(P_k)$ to the corresponding port $P_k$ by means of said translated control tagging information.

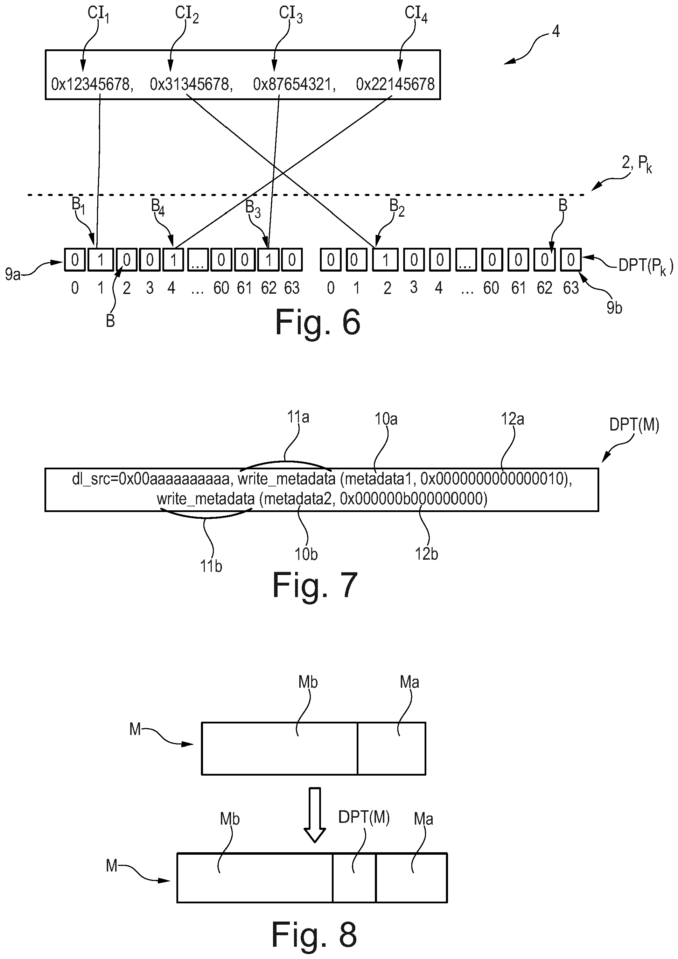

**Figure 6** is a flowchart of an embodiment of this data-plane tag association step. The network element 2 can notably implement at each of its ports $P_k$ the one or more associated data-plane tag $DPT(P_k)$ as metadata words. In particular, if the number of set of connected devices 3 (SD-LANs) accessible through the network element 2, is less than the total number of SD-LANs, for example if there are less than 128 SD-LANs accessible through the network element 2 whereas there are in total 200 SD-LANs in the network, the network element 2 can store tags $DPT(P_k)$ in two 64-Bits B metadata words 9a, 9b, and the controlling device 4 can store a mapping between the respective global identifiers $CI_1$, $CI_2$, $CI_3$, $CI_4$ of each SD-LAN and the bit position $B_1$, $B_2$, $B_3$, $B_4$ within the local metadata words 9a, 9b.

More precisely, at a given point in time, the controlling device 4 may observe a limited number of SD-LANs, notably less than 128 SD-LANs. Thus, the controlling device 4 can dedicate a bit $B_1$, $B_2$, $B_3$, $B_4$ of the metadata words 9a, 9b of an output port $P_k$ to each of the observed SD-LANs. As represented on figure 6, the value of a dedicated bit B, $B_1$, $B_2$, $B_3$, $B_4$ is set to 1 - respectively 0 - to indicate that the output port $P_k$ is tagged - respectively not tagged - with the associated SD-LAN.

Once the network elements 2 have been configured, the method provides, upon the reception by a network element 2 of a message M from an emitting connected object 3 to be transmitted to at least one receiving connected object 3, for executing by dedicated means of said network element a procedure for forwarding said message to said receiving connected object.

This forwarding procedure provides a first step for associating the message M with one data-plane tag DPT(M) which is created according to a data plane rule generated by the controlling device 4 and to at least one information about the emitting connecting object 3 provided within said message. Moreover, the controlling device 4 comprises means for generating such a data plane rule, and the network element 2 comprises means for creating and associating such a data-plane tag DPT(M) to the message M.

The data-plane tag DPT(M) is created according to information about the at least one set of connected objects 3 (SD-LAN) to which the emitting connected object 3 pertains. Moreover, the data-plane tag DPT(M) can be created with a $2^k$-Bit format, with k being an integer number, for example with a 128-Bit format, especially if the number of sets SD-LAN of connected objects 3 observed by the network element 2 is less or equal to 128.

The data-plane tag DPT(M) can also be created according to an eventual consecutive network element of the present network element 2 on the data path between the emitted connected object 3 and the at least one receiving connected object 3.

In particular, the network element 2 can identify the emitting connected object 3 by means of a source Media Access Control (MAC) address, or any other type of similar information, that can be inserted within the header Ma or the payload Mb of the message M.

**Figure 7** shows a first example of a data-plane tag DPT(M) according to a first variant, wherein the data plane rule generated by the controlling device 4 allows the network element 2 for creating said data-plane tag by using internal metadata words 10a, 10b associated with the message M. In particular, the network element 2 can create a 128-Bit metadata word, either from two 64-Bit metadata words 11 a, 11 b, as represented on the figure, or from four 32-Bit metadata words.

In particular, the data plane rule allows the network element 2 for producing a data-plane tag DPT(M) upon modifying the internal metadata words 10a, 10b associated to the message M with respective marks/values 12a, 12b depending on the at least one set of SD-LANs to which the emitting object 3 pertains. To do so, the network element 2 can notably use data-plane tagging information such as those used during the data-plane tag port associating step, which provides for associating dedicated local bits to respectively one global identifier of a set SD-LAN.

**Figure 8** shows a second example of a data-plane tag DPT(M) according to a second variant, wherein the data plane rule generated by the controlling device 4 allows the network element 2 for creating said tag by using Multi-Protocol Label Switching (MPLS) labels, said data-plane tag being then inserted within the header Ma of the message M. For example, the data plane rule can provide for creating a 128-Bit tag from four 32-Bit MPLS labels.

The forwarding procedure then provides a step for determining at least one port $P_k$ of the network element 2 through which receiving connected objects 3 are accessible, said objects being unique in case of a unicast message M and multiple in case of a broadcast/multicast message M. To do so, the network element 2 comprises means for performing such a determination.

In particular, the appropriate port $P_k$ is determined by the network element 2 by means of a destination address implemented within the message M, especially for the case when the message M is a unicast message to be transmitted to only one receiving connected object 3.

In case of a broadcast/multicast message M, said message may comprise a standardized broadcast/multicast address, which does not point to a specific destination.

The forwarding procedure then provides, by appropriate means implemented within the network element 2, for comparing, at each determined port $P_k$, the data-plane tag DPT(M) associated with the message M with the at least one data-plane tag DPT($P_k$) associated with the determined port $P_k$, and then either for forwarding the message M out of said determined port or for discarding said message according to the result of said comparison.

In particular, the method can provide to forward the message M out of the determined port $P_k$ by the network element 2 if the data-plane tag (DPT(M)) associated with the message (M) satisfies the following relation:

$$F(DPT(M), DPT(P_k)) = TRUE$$

wherein F is a validation function at the data plane level, and the network element 2 can comprise means for forwarding the message M which are adapted to forward said message out of said determined port if said relation is satisfied.

For example, the function F should be the binary operation AND, which for example explains by 1 AND 1=1 or 1 AND 0=0, the message M being forwarded out of the port $P_k$ if the following relation is satisfied.

$$DPT(M) \text{ AND } DPT(P_k) \neq 0$$

This forwarding procedure is particularly appropriate for the transmitting of unicast messages M between an emitting connected object 3 and a single receiving connected object 3, but it can also be implemented for transmitting messages M from a same connected object 3 to several N receiving connected objects 3. In these cases, the network element 2, after having determined the ports $P_k$ for reaching each of the N receiving connected objects 3 (N being a natural number at least equal to 2), especially according to the multicast tree mTree presented above, makes N copies of the message M, and then, at each determined port $P_k$, compares the data-plane tag DPT(M) with each data-plane tag $DPT(P_k)$ associated with said determined port in the same manner than described above, in order to decide if the message M can be sent out of port $P_k$ or discarded.

Thus, most of the steps of the method are performed by the network element 2, i.e. at the data plane level, and the number of steps performed by the controlling device 4, i.e. at the control plane level, is reduced at the minimum, which allows to perform said method in a faster manner, at least for the two following reasons:

- in the data plane level, the timescale is faster, as the forwarding of messages M must be realized as fast as possible;
- in a Software Defined Networking (SDN) architecture, a centralized controlling device 4 is implemented, whereas thousands of network elements 2 are deployed across the network infrastructure.

In the network 1, SD-LANs may be specified by a user-friendly interface, based for example on service requests. Once this has been done, the network elements 2 may be configured by the controlling devices 4 so that traffic isolation between SD-LANs is ensured. Moreover, the network elements 2 are configured for forwarding unicast, multicast and broadcast traffic to the appropriate SD-LANs. The connected objects 3 belonging to more than one SD-LAN do not need to be aware of the SD-LANs they belong to, nor to duplicate traffic. The connected objects 3 do not need to tag (in a meaning similar to VLAN tagging) outgoing messages, nor to check for duplicates in received messages.

**Figure 5** is a structural view of the controlling device 4, which comprises a processor 10 and a memory 11. The memory 11 stores a computer program CP which, when executed by the processor 10, causes the controlling device 4 to execute the method described above. A controlling device 4 and the associated network element 2 may form a unique device or be two separate devices.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, Digital Signal Processor (DSP) hardware, network processor, Application Specific Integrated Circuit (ASIC), Field Programmable Gate Array (FPGA), Read Only Memory (ROM) for storing software, Random Access Memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for transmitting messages (M) from an emitting connected object (3) to at least one receiving connected object (3) through at least one network element (2), said network element comprising at least two ports ($P_k$) connected respectively to said emitting connected object and to said receiving connected object, either directly or through one or more other network elements (2), said method providing for configuring the network element (2) according to a procedure which provides for:

- transmitting from a controlling device (4) to the network element (2) data-plane tagging information specifying at least one set of connected objects (3) allowed to communicate with each other through said network element (2);
- for at least one port ($P_k$), associating said port with one or more data-plane tags ($DPT(P_k)$) respectively identifying a set of connected objects (3) including one or more connected objects (3) accessible through said port, in function of the data-plane tagging information;

said method further providing, upon the reception by said network element of a message (M) from the emitting connected object (3) to be transmitted to at least one receiving connected object (3), for forwarding said message to said receiving connected object according to a procedure which provides for:

- associating said message with one data-plane tag (DPT(M)) which is created according to a data plane rule generated by the controlling device (4) and to at least one information about said emitting connected object provided within said message;
- determining at least one port ($P_k$) of the network element (2) through which said receiving connected object is accessible;
- at each determined port ($P_k$), comparing the data-plane tag (DPT(M)) associated with the message (M) with the at least one data-plane tag (DPT($P_k$)) associated with the determined port ($P_k$);
- forwarding the message (M) out of the determined port ($P_k$) or discarding the message (M) according to the result of said comparison.

2. Method according to claim 1, wherein data plane tagging information are transmitted to the network element (2) upon reception by a port ($P_k$) of the network element (2) of a first message from a new connected object (3), said network element further sending to the controlling device (4) a request for obtaining said data-plane tagging information and then associating the receiving port ($P_k$) of the network element (2) with a data-plane tag (DPT($P_k$)) according to said data-plane tagging information.

3. Method according to one of claims 1 or 2, wherein the data-plane tagging information are generated by the controlling device (4) from control tagging information which are stored by said controlling device (4) and translated by said controlling device in a format readable by the network element (2).

4. Method according to any one of claims 1 to 3, wherein the generated data plane rule allows the network element (2) for creating the data-plane tag (DPT(M)) to be associated with the message (M) by using internal metadata words associated with said message.

5. Method according to any one of claims 1 to 3, wherein the generated data plane rule allows the network element (2) for creating the data-plane tag (DPT(M)) to be associated with the message (M) by using Multi-Protocol Label Switching (MPLS) labels.

6. Method according to any one of claims 1 to 5, wherein the data-plane tag (DPT(M)) to be associated with the message (M) is created with a $2^k$-bit format, with k being an integer number.

7. Method according to any one of claims 1 to 6, wherein the data-plane tag (DPT(M)) to be associated with the message (M) is created according to information about at least one set of connected objects (3) to which the emitting connected object (3) pertains and/or to an eventual consecutive network element on the data path between the emitting connected object (3) and the at least one receiving connected object (3).

8. Method according to any one of claims 1 to 7, wherein the message (M) is a unicast message (M), the port ($P_k$) of the network element (2) through which the receiving connected object (3) is accessible being determined by means of a destination address implemented within the unicast message (M).

9. Method according to any one of claims 1 to 7, wherein the message (M) is a broadcast/multicast message (M), the ports ($P_k$) of the network element (2) through which the receiving connected objects (3) are accessible being determined by means of a standardized broadcast/multicast address implemented within the broadcast/multicast message (M), said method further providing for duplicating the message (M) and to send said duplicated message to each of the ports ($P_k$).

10. Method according to any one of claims 1 to 9, wherein the message (M) is forwarded out of the determined port ($P_k$) by the network element (2) if the data-plane tag (DPT(M)) associated with the message (M) satisfies the following relation:

$$F(DPT(M), DPT(P_k)) = TRUE$$

wherein F is a validation function at the data plane level.

11. Computer program (CP) comprising instructions for performing the method of one of claims 1 to 10 when said instructions are executed by a computer.

12. Controlling device (4) for configuring a network element (2) intended to transmit messages (M) from an emitting connected object (3) to at least one receiving connected object (3), said network element comprising at least two ports ($P_k$) connected respectively to said emitting connected object and to said receiving connected object, either directly or through one or more other network elements (2), said controlling device comprising means for:

- transmitting to the network element (2) data-plane tagging information specifying at least one set of connected objects (3) allowed to communicate with each other through said network element (2), so as to allow the association of at least one port ($P_k$) with one or more data-plane tags ($DPT(P_k)$) respectively identifying a set of connected objects (3) including one or more connected objects (3) accessible through said port, in function of the data-plane tagging information;
- generating, upon reception by the network element (2) of a message (M) from the emitting connected object (3) to be transmitted to at least one receiving connected object (3), a data plane rule for allowing the network element (2) to:

  ◦ create a data-plane tag ($DPT(M)$) according to said data plane rule and to at least one information about said emitting connected object that is provided within said message, and then to associate said data-plane tag with said message;
  ◦ determine at least one port ($P_k$) of the network element (2) through which said receiving connected object is accessible;
  ◦ at each determined port ($P_k$), compare the data-plane tag ($DPT(M)$) associated with the message (M) with the at least one data-plane tag ($DPT(P_k)$) associated with the determined port ($P_k$);
  ◦ forward the message (M) out of the determined port ($P_k$) or discard the message (M) according to the result of said comparison.

13. Controlling device (4) according to claim 12, wherein it comprises means for generating the data-plane tagging information from a control-plane tagging information stored by the controlling device (4), said means being arranged for translating said control tagging information in a format readable by the network element (2).

14. Network element (2) for transmitting messages (M) from an emitting connected object (3) to at least one receiving connected object (3) through at least one network element (2), said network element comprising at least two ports ($P_k$) connected respectively to said emitting connected object and to said receiving connected object, either directly or through one or more other network elements (2), said network element comprising means for executing a configuration procedure, said means comprising means for:

- receiving from a controlling device (4) data-plane tagging information specifying at least one set of connected objects (3) allowed to communicate with each other through said network element (2);
- for at least one port ($P_k$), associating said port with one or more data-plane tags ($DPT(P_k)$) respectively identifying a set of connected objects (3) including one or more connected objects (3) accessible through said port, in function of the data-plane tagging information;

said network element further comprising means for executing, upon the reception by said network element of a message (M) from the emitting connected object (3) to be transmitted to at least one receiving connected object (3), a procedure for forwarding said message to said receiving connected object, said means comprising means for:

- associating said message with one data-plane tag ($DPT(M)$) which is created according to a data plane rule generated by the controlling device (4) and to at least one information about said emitting connected object provided within said message;
- determining at least one port ($P_k$) of the network element (2) through which said receiving connected object is accessible;
- at each determined port ($P_k$), comparing the data-plane tag ($DPT(M)$) associated with the message (M) with the at least one data-plane tag ($DPT(P_k)$) associated with the determined port ($P_k$);
- forwarding the message (M) out of the determined port ($P_k$) or discarding the message (M) according to the result of said comparison.

**15.** Network element (2) according to claim 14, wherein it comprises means for sending to the controlling device (4), upon reception by a port ($P_k$) of the network element (2) of a first message from a new connected object (3), a request for obtaining said data-plane tagging information and then associating the receiving port ($P_k$) of the network element (2) with a data-plane tag ($DPT(P_k)$) according to said data-plane tagging information.

**16.** Network element (2) according to claim 14 or 15, wherein the forwarding means are adapted to forward the message (M) out of the determined port (Pk) by the network element (2) if the data-plane tag (DPT(M)) associated with the message (M) satisfies the following relation:

$$F(DPT(M), DPT(Pk)= TRUE$$

wherein F is a validation function at the data plane level.

## Fig. 1

| | |
|---|---|
| $d_i$, Inport $(d_i)$ | S1 |
| RX Logical Topology data LT | S2 |
| $T(P_k) = F(LT)$ | S3 |
| Multicast Tree mTree = $F(LT, T(P_k))$ | S4 |
| Configure Network Element in function of mTree | S5 |

## Fig. 2

## Fig. 5

Fig. 3

Fig. 4

CI$_1$  CI$_2$  CI$_3$  CI$_4$  4

0x12345678,  0x31345678,  0x87654321,  0x22145678

2, P$_k$

B$_1$  B$_4$  B$_3$  B$_2$  B

9a

| 0 | 1 | 0 | 0 | 1 | ... | 0 | 0 | 1 | 0 | | 0 | 0 | 1 | 0 | 0 | ... | 0 | 0 | 0 | 0 |

DPT(P$_k$)

0  1  2  3  4  ...  60  61  62  63    0  1  2  3  4  ...  60  61  62  63

9b

B

# Fig. 6

11a  10a  12a  DPT(M)

dl_src=0x00aaaaaaaaaa, write_metadata (metadata1, 0x0000000000000010),
write_metadata (metadata2, 0x000000b000000000)

11b  10b  12b

# Fig. 7

Mb  Ma

M

Mb  DPT(M)  Ma

M

# Fig. 8

Europäisches
Patentamt

European
Patent Office

Office européen
des brevets

# EUROPEAN SEARCH REPORT

**Application Number**

EP 17 15 4316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/230047 A1 (SUBRAHMANIAM RAMESH [US] ET AL) 5 September 2013 (2013-09-05) * abstract; figures 2,3 * * paragraphs [0002] - [0026], [0034] - [0076] * | 1-16 | INV. H04L12/46 H04L12/721 |
| A | EP 2 608 462 A1 (NEC CORP [JP]) 26 June 2013 (2013-06-26) * paragraphs [0044] - [0070]; figures 1,2 * | 1-16 | |
| A | US 2014/355415 A1 (MANDAL SUBHASREE [US] ET AL) 4 December 2014 (2014-12-04) * paragraphs [0035] - [0070]; figures 1A, 4 * | 1-16 | |

**TECHNICAL FIELDS SEARCHED (IPC)**

H04L

The present search report has been drawn up for all claims

| Place of search | Date of completion of the search | Examiner |
|---|---|---|
| Munich | 18 July 2017 | Itani, Maged |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 4316

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2017

| Patent document cited in search report | | Publication date | Patent family member(s) | | Publication date |
|---|---|---|---|---|---|
| US 2013230047 | A1 | 05-09-2013 | CN 104145457 A<br>EP 2823605 A1<br>US 2013230047 A1<br>WO 2013132395 A1 | | 12-11-2014<br>14-01-2015<br>05-09-2013<br>12-09-2013 |
| EP 2608462 | A1 | 26-06-2013 | CN 103026669 A<br>EP 2608462 A1<br>JP 5413517 B2<br>JP WO2012023604 A1<br>US 2013148667 A1<br>WO 2012023604 A1 | | 03-04-2013<br>26-06-2013<br>12-02-2014<br>28-10-2013<br>13-06-2013<br>23-02-2012 |
| US 2014355415 | A1 | 04-12-2014 | CN 103947164 A<br>DE 202012013425 U1<br>EP 2767040 A1<br>US 2013094350 A1<br>US 2014355415 A1<br>WO 2013055697 A1 | | 23-07-2014<br>12-01-2017<br>20-08-2014<br>18-04-2013<br>04-12-2014<br>18-04-2013 |

EPO FORM P0459

For more details about this annex : see Official Journal of the European Patent Office, No. 12/82